# EUROPEAN PATENT APPLICATION

(11) **EP 1 052 272 A2**
(43) Date of publication of application: **15.11.2000**
(21) Application number: 00109147.9
(22) Date of filing: 08.05.2000
(51) Int. Cl.: C08L 67/00, C08K 7/06, C08K 7/14

(54) **Liquid crystal polyester resin composition**

(30) Priority: 10.05.1999 JP 12794799
(71) Applicant: Sumitomo Chemical Company, Limited, Chuo-ku Osaka 541-8550 (JP)
(72) Inventor: Maeda, Mituo, Tsukuba-shi, Ibaraki (JP); Nakamura, Hiroshi, Tsuchiura-shi, Ibaraki (JP)
(74) Representative: VOSSIUS & PARTNER

(57) **Abstract**

Provided is a liquid crystal polyester resin composition comprising a liquid crystal polyester resin and a fluorocarbon polymer having a flow beginning temperature of 350°C or less. The composition can give a molded article of excellent appearance, mechanical strength and lubricative property, which is useful especially in electric and electronic fields.

## Description

The present invention relates to a liquid crystal polyester resin composition which can be utilized as a raw material for a resin molded article having excellent appearance, mechanical strength and lubricative properties in electric and electronic fields, and more specifically, to a liquid crystal polyester resin composition in which dispersibility of a fluorine resin in the composition is improved.

A liquid crystal polyester resin which manifests liquid crystal property in melting (hereinafter, sometimes referred to as LCP) is excellent in heat-resistance, and is excellent in flowability and processability in melting, therefore, LCP is used, as a resin molding material which can provide precise molding, in various fields typically including electric and electronic fields. Further, a resin composition obtained by inclusion of a fluorine resin such as polytetrafluoroethylene (hereinafter, sometimes referred to as PTFE) and the like into LCP is known to have improved self lubrication properties, and improved releasing properties from a mold in molding and improved friction abrasion properties.

Technologies regarding resin compositions composed of a liquid crystal polyester resin and PTFE are disclosed, for example, in US Patent Nos. 4,417,020 and 4,429,078.

However, in general, fluorine resins, particularly PTFE having high self lubrication imparting effect have a high melting point, and manifest an extremely high melt viscosity or does not flow at all even at higher temperatures more than the melting point. Therefore, in resin compositions obtained by compounding such a fluorine resin into a liquid crystal polyester resin, the fluorine resin can not be dispersed easily even by shearing, or flocculates to give materials having extremely poor dispersibility, in processes such as kneading extrusion, injection molding and the like. Resultantly, there occur deterioration of the appearance of a molded article, decrease in mechanical strength of a molded article, poor releasing from a mold, falling of fluorine resin particles from the surface of a molded article, and the like.

An object of the present invention is to provide a liquid crystal polyester resin composition having excellent dispersibility, particularly, dispersibility of a fluorine resin component.

Another object of the present invention is to provide a liquid crystal polyester resin composition which gives excellent appearance, mechanical strength and lubricative properties of the resulting resin molded article and can be utilized as a raw material for a resin molded article in electric and electronic fields and the like.

That is, the present invention provides a liquid crystal polyester resin composition comprising a liquid crystal polyester resin and a fluorocarbon polymer having a flow beginning temperature of 350°C or less, measured according to the following method, in an amount of 0.2 to 50 parts by weight based on 100 parts by weight of the liquid crystal polyester resin:

Flow beginning temperature: a temperature at which the melt viscosity measured by a capillary type rheometer is 48,000 poise when a resin which has been melted by heating at a heating rate of 4°C/min is extruded through a nozzle having an internal diameter of 1 mm and a length of 10 mm under a load of 100 kg/cm².

The present invention comprises a liquid crystal polyester resin and a specific fluorocarbon polymer in a specific ratio.

As the liquid crystal polyester resin to be used in the present invention, there are listed polyesters generally called thermotropic liquid crystal polymer, and for example, polyesters (1) to (4) shown in the following list can be used.
(1) Polyesters composed of combined units of an aromatic dicarboxylic acid, aromatic diol and aromatic hydroxycarboxylic acid.
(2) Polyesters composed of different aromatic hydroxycarboxylic acid units.
(3) Polyesters composed of combined units of an aromatic dicarboxylic acid and aromatic diol.
(4) Polyesters obtained by reacting aromatic hydroxycarboxylic acid with a polyester such as polyethylene terephthalate and the like.

These liquid crystal polyester resins may be used in combination of two or more. Further, ester-forming derivatives thereof may also be used instead of the above-described aromatic dicarboxylic acid, aromatic diol and aromatic hydroxycarboxylic acid.

As the liquid crystal polyester resin, there is preferably used a polyester which forms an anisotropic melted body at a temperature of 400°C or less from the standpoint of molding processability, and the like.

Examples of the repeating structure unit of the liquid crystal polyester include, but are not limited to, the following structure units.

Repeating structure units derived from aromatic hydroxycarboxylic acids:

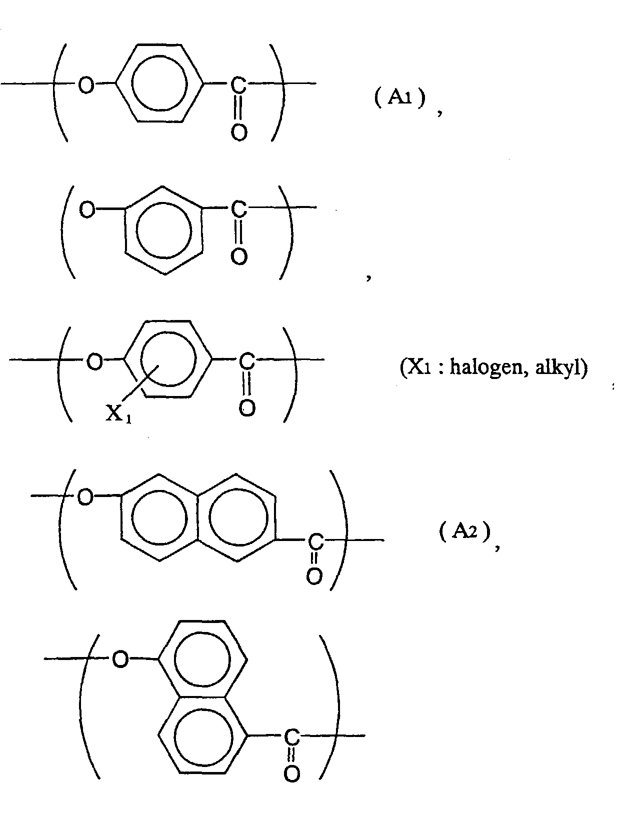

Repeating structure units derived from aromatic dicarboxylic acids:

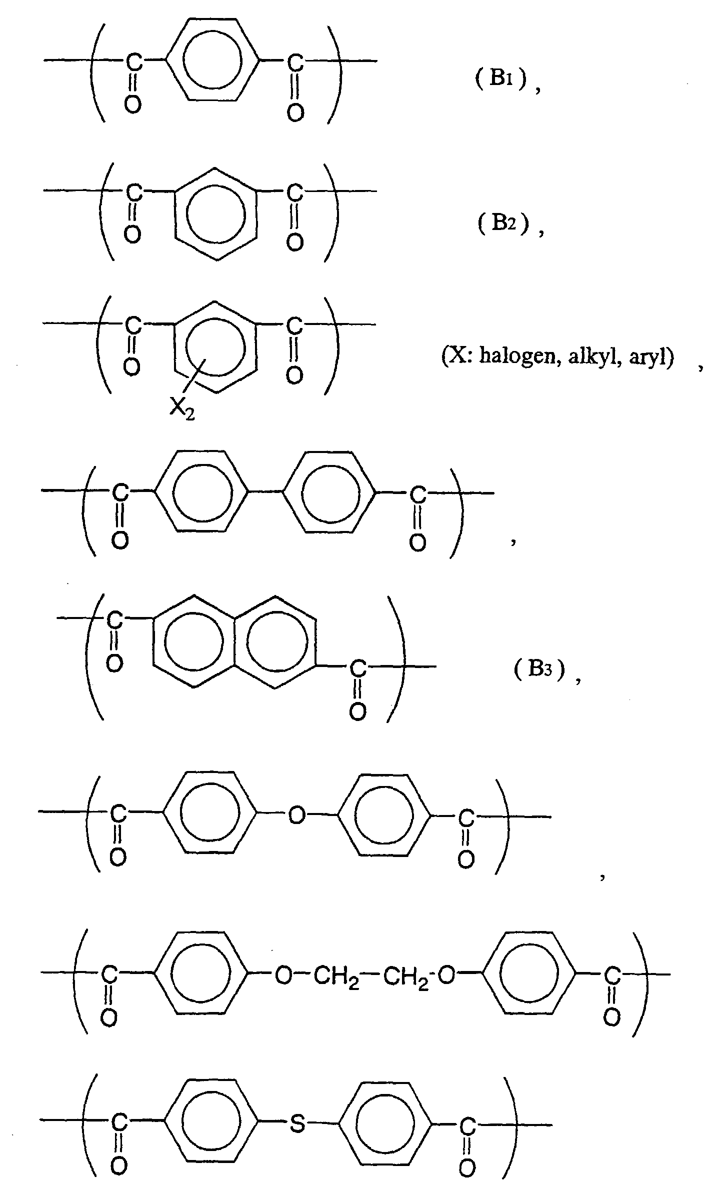

Repeating structure units derived from aromatic diols:

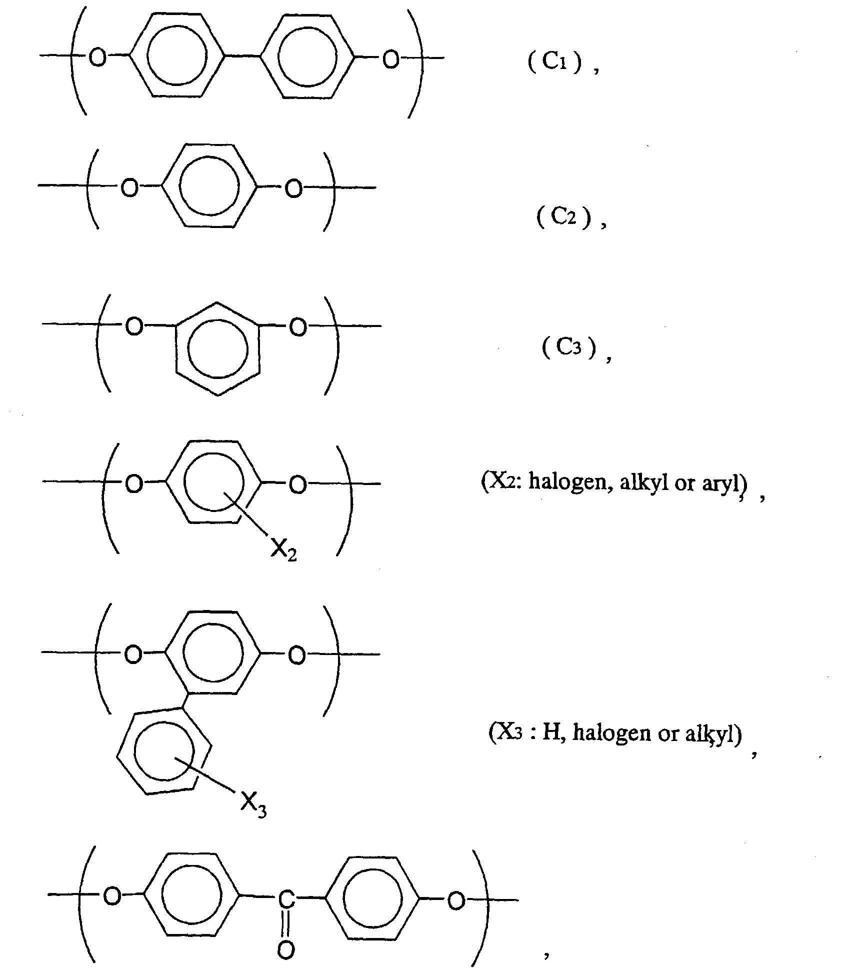

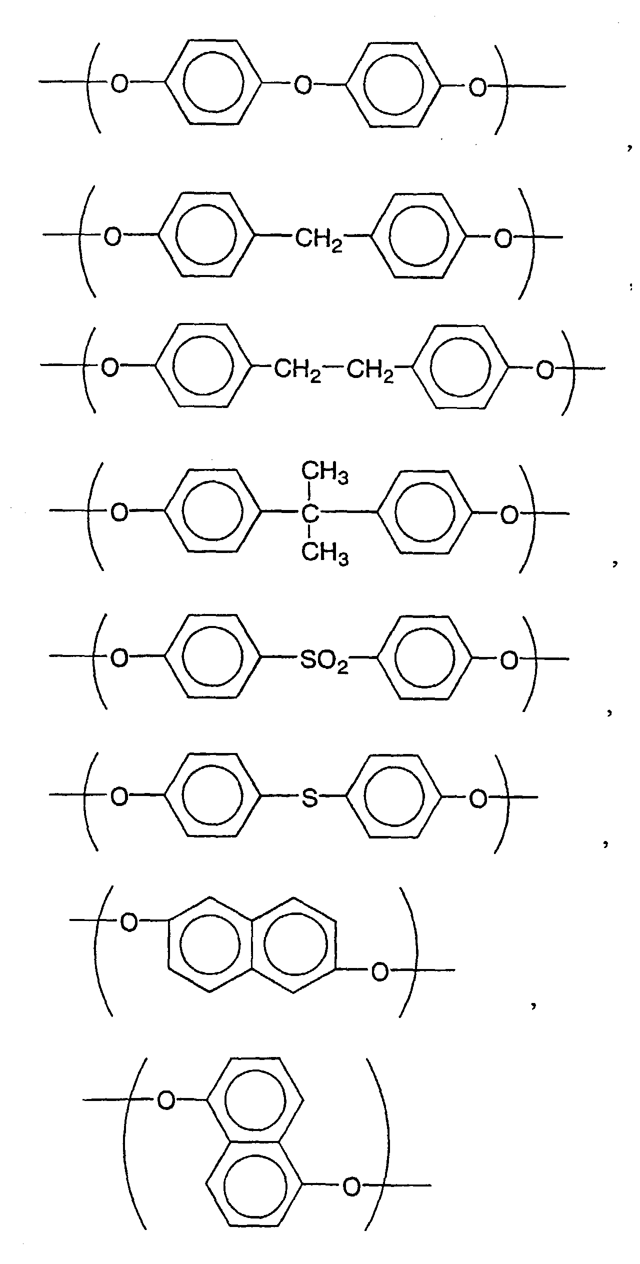

As the liquid crystal polyester resin used in the present invention, liquid crystal polyester resins containing a repeating structure unit represented by (A₁) in an amount of at least 30 mol% are particularly preferably used, from the standpoint of balance between heat-resistance, mechanical property and processability.

As the above-mentioned combinations of repeating structure units, the following combinations (a) to (g) are preferable.
(a): combination of (A₁), (B₁) and (C₁)
(b): combination of (A₁), (B₁), (B₂) and (C₁)
(C): combination of (A₁), and (A₂)
(d): combination (a) or (b) wherein a part of (A₁) is substituted by (A₂)
(e): combination (a) or (b) wherein a part of (B₁) is substituted by (B₃)
(f): combination (a) or (b) wherein a part of (C₁) is substituted by (C₃)
(g): combination obtained by adding structure units of (B₁) and (C₂) to combination of structure unit (c)

Liquid crystal polyester resins of (a), (b) and (c) which are basic structures are described in Japanese Patent Kokoku Publication (JP-B) Nos. 47-47870 and 63-3888, respectively.

The specific fluorocarbon polymer used in the present invention is not particularly restricted, providing it is a polymer having a flow beginning temperature of 350°C or lower measured by the above-mentioned method. The flow beginning temperature is, preferably, from 225°C to 350°C, and more preferably, from 265°C to 350°C. The fluorocarbon polymer has a lower molecular weight indicated by a flow beginning temperature and higher flowability in melt-kneading, thus exhibiting excellent dispersibility in a liquid crystal polyester resin. Examples thereof include PTFE, tetrafluoroethylene-hexafluoropropylene copolymer, Polytrichlorofluoroethylene, tetrafluoroethylene-perfluoroalkyl vinyl ether copolymer and the like, and particularly, lower molecular weight PTFE which has been fluorinated to molecular terminals thereof is preferable. Examples of such commercially available PTFE include "CEFRAL LUBE I", "CEFRAL LUBE IP" (trade name: manufactured by Central Glass Co., Ltd.) and the like.

In the present invention, the content of the above-mentioned fluorocarbon polymer is from 0.2 to 50 parts by weight, preferably from 0.2 to 30 parts by weight, and more preferably from 0.2 to 25 parts by weight based on 100 parts by weight of the liquid crystal polyester resin. When less than 0.2 parts by weight, the addition effect of a fluorocarbon polymer is not obtained easily. On the other hand, when over 50 parts by weight, the molding properties and the mechanical strength of the resulting molded article lower.

In the resin composition of the present invention, fillers can be compounded for improving performances such as the elastic modulus, mechanical strength and the like of the resulting molded article. As the filler, glass fibers or carbon fibers are particularly useful, and both of them can also be used together. The length of such fibers as a filler is not restricted, and can be appropriately selected depending on the desired molded article.

The compounding ratio of glass fibers, carbon fibers and the like to be compounded as a filler is suitably from 10 to 100 parts by weight based on 100 parts by weight of a liquid crystal polyester resin, from the standpoints of processability and mechanical ability of the resulting resin molded article.

In addition to the above-mentioned glass fibers and carbon fibers, there may also be compounded, for example, one or more of fibrous fillers such as ceramic fibers, silica alumina fibers, wollastonite, potassium titanate fibers, aramid fibers and the like; inorganic filler such as calcium carbonate, talc, mica, clay, glass beads and the like, if necessary.

In the resin composition of the present invention, one or more of usual additives such as coloring agents such as dye, pigment and the like; antioxidants; heat stabilizers; ultraviolet absorbers; antistatic agents; surfactants and the like can be added, within the range wherein the object of the present invention is attained.

Further, in the present invention, in addition to a liquid crystal polyester resin, a small amount of other thermoplastic resins and thermosetting resins can also be compounded. Examples of the thermoplastic resin include polyamide, polyester, polyphenylene sulfide, polyether ketone, polycarbonate, polyphenylene ether and modified substances thereof, polysulfone, polyether sulfone, polyether imide and the like. Examples of the thermosetting resin include, for example, phenol resins, epoxy resins, polyimide resins and the like. Also, two or more of them may be combined and compounded.

The means for compounding the resin composition of the present invention is not particularly restricted. For example, in a general method, a liquid crystal polyester resin and the above-mentioned fluorocarbon polymer, and if necessary, fillers such as glass fiber and the like, further, various additives are mixed by a Henschel mixer, tumbler or the like, and melt-kneaded using an extruder.

Use of parts and members molded from the resin composition of the present invention is not particularly restricted. They can be used in wide variety of uses such as: electric and electronic parts such as connector, socket, relay parts, coil bobbin, light pick up vibrator, printed wiring board, computer-related parts and the like; semiconductor production process-related parts such as IC tray, wafer carrier and the like; domestic electric appliance parts such as VTR, television, iron, air conditioner, stereo, cleaner, refrigerator, rice boiler, illumination instruments and the like; illumination instrument parts such as lamp reflector, lamp holder and the like; audio product parts such as compact disk, laser disk, speaker and the like; communication instrument parts such as light cable ferrule, telephone parts, facsimile parts, modem and the like; copy machine-related parts such as separation claw, heated holder and the like; machine parts such as impeller, fan gear, gear, bearing, motor parts and motor case, and the like; automobile parts such as mechanical parts for automobile, engine parts, inner parts of engine room, electrical equipment, interior parts and the like; cooking appliances such as microwave cooking pan, heat-resistant dish and the like; building raw materials of materials for construction and building such as heat-insulation and sound-insulation materials like flooring material, wall material and the like, supporting materials like beam, pillar and the like, roof materials and the like; materials of airplane, space ship, space machinery; materials of radiation facility such as nuclear reactor and the like, materials of marine facility, washing jig, parts of optical instrument, valves, pipes, nozzles, filters, membrane, medical instruments parts and medical materials, parts of sensors, sanitary equipment, and the like.

The resin composition of the present invention can be molded into a film or sheet, to be utilized as an industrially useful material. Examples of the use include display parts, electrically insulating film, flexible circuit board film, wrapping film, recording medium film and the like.

Further, the resin composition of the present invention can be processed into fibrous forms such as continuous fiber, short fiber, pulp and the like, to be used as an industrially useful material. Examples thereof include cloth, heat-resistant thermal insulation material, reinforcing material for FRP, rubber reinforcing material, rope, cable, non-woven fabric and the like.

### EXAMPLES

In the examples, evaluations of molded articles were conducted according to the following methods.

### Dispersibility of PTFE:

An injection molded article is abraded, and observed using a scanning type electron microscope at a magnification of 500 to 1000, and dispersibility and dispersed particle size were evaluated.

### Tensile strength:

ASTM No. 4 dumbbell was molded using an injection molding machine, and tensile strength was measured according to ASTM D638.

### Deflection temperature under load

A specimen of 12.7 mm × 6.4 mm × 127 mm was molded using an injection molding machine, and deflection temperature under load was measured according to ASTM D648.

### Izod impact strength (no notch):

A flexural test specimen of length 127 mm × width 12.7 mm × thickness 6.4 mm was bisected along the injection direction and used as a specimen, and Izod impact strength was measured according to ASTM D256.

### Releasing resistance:

A cylindrical bush of inner diameter 11 mm × outer diameter 15 mm × height 15 mm was molded using an injection molding machine (manufactured by Sumitomo Heavy Industries, Ltd., Sycap N110/45) at a cylinder temperature of 350°C and a mold temperature of 130°C, and releasing resistance when the bush is released from a mold was detected by setting a pressure sensor to an ejector. In this operation, the releasing resistance of the composition of the present invention is represented by % based on that of the composition containing no PTFE as 100%.

### Friction coefficient:

A friction ring of outer diameter 25.6 mm × inner diameter 20 mm × height 15 mm was injection-molded, and friction coefficient was measured by Suzuki type friction abrasion testor using SUS304 as an opposite material at a pressure of 6 kg/cm² and a speed of 40 m/min.

### Appearance of molded article:

The surface of an injection-molded article was observed visually.

### Examples 1-2 and Comparative Examples 1-3

A liquid crystal polyester resin which is composed of repeating structure units A₁, B₁, B₂ and C₁ and in which A₁:B₁:B₂:C₁ molar ratio is 60:15:5:20; a fluorine resin (manufactured by Central Glass Co., Ltd., trade name: "CEFRAL LUBE I") which has a flow beginning temperature of 330°C and a melting point of 318°C and which has been fluorinated to molecular terminals thereof or a fluorine resin (manufactured by Asahi Glass Co., Ltd., "FLUONE L169J") which has a melting point of 326°C and which does not flow even at 380°C in a measurement according to the above-described method for measuring flow beginning temperature, as PTFE; and glass fiber (manufactured by Central Glass Co., Ltd., EFH75-01) were mixed by a Henschel mixer at a composition shown in Table 1. Then, the mixture was granulated by a twin-screw extruder (PCM-30 type, manufactured by Ikegai Iron Works, Ltd.) at a cylinder temperature of 340°C, to obtain a pellet composed of a liquid crystal polyester resin composition.

The resulted pellet was injection-molded by PS40E5ASE type injection molding machine manufactured by Nissei Plastic Industrial Co., Ltd. at a cylinder temperature of 350°C and a mold temperature of 130°C, to mold a specimen for the above-described evaluation.

The evaluation results are shown in Table 1. It is known that the liquid crystal polyester resin composition of the present invention gives excellent dispersion of PTFE, and provides a molded article excellent in self lubricating property.

**Table 1**

| | LCP (parts by weight) | Fluorine resin (parts by weight) | Glass fiber (parts by weight) | Releasing property from mold (%) | Tensile strength (kg/cm²) | Deflection temperature under load (°C) |
|---|---|---|---|---|---|---|
| Example 1 | 100 | CEFRAL LUBE I (1.0) | 66.7 | 73 | 1610 | 277 |
| Example 2 | 100 | CEFRAL LUBE I (2.0) | 66.7 | 56 | 1540 | 275 |
| Comparative example 1 | 100 | - | 66.7 | 100 | 1600 | 277 |
| Comparative example 1 | 100 | CEFRAL LUBE I (0.1) | 66.7 | 98 | 1600 | 277 |
| Comparative example 1 | 100 | FLUONE L169J (2.0) | 66.7 | 95 | 1540 | 279 |
| CEFRAL LUBE I: Manufactured by Central Glass Co., Ltd., trade name FLUONE L169J: Manufactured by Asahi Glass Co., Ltd., trade name | | | | | | |

### Example 3

A liquid crystal polyester resin which is composed of repeating structure units A₁, B₁, B₂ and C₁ and in which A₁:B₁:B₂:C₁ molar ratio is 60:15:5:20; a fluorine resin (manufactured by Central Glass Co., Ltd., trade name: "CEFRAL LUBE IP") which has a flow beginning temperature of 344°C and a melting point of 323°C and which has been fluorinated to molecular terminals thereof, as PTFE; glass fiber (manufactured by Central Glass Co., Ltd., EFDE90-01) and talc (S talc, manufactured by Hayashi Kasei Co., Ltd.) were mixed by a henschel mixer at a composition shown in Table 2. Then, the mixture was granulated by a twin-screw extruder (PCM-30 type, manufactured by Ikegai Iron Works, Ltd.) at a cylinder temperature of 340°C, to obtain a pellet composed of a liquid crystal polyester resin composition.

The resulted pellet was injection-molded by PS40E5ASE type injection molding machine manufactured by Nissei Plastic Industrial Co., Ltd. at a cylinder temperature of 350°C and a mold temperature of 130°C, to mold a specimen for the above-described evaluation. The evaluation results are shown in Table 2.

### Comparative Example 4

A resin composition was granulated, a specimen was molded and tests were conducted, in the same manner as in Example 3, except that a fluorine resin (manufactured by Asahi Glass Co., Ltd., "FLUONE L169J") which has a melting point of 326°C and which does not flow even at 380°C in a measurement according to the above-described method for measuring flow beginning temperature was used, The evaluation results are shown in Table 2.

It is known from the results in Table 2 that the liquid crystal polyester resin composition of the present invention gives excellent dispersion of PTFE, and manifests excellent abilities.

**Table 2**

| | LCP (parts by weight) | Fluorine resin (parts by weight) | Glass fiber (parts by weight) | Talc (parts by weight) | Dispersed particle size of fluorine resin (µm) | Deflection temparature under load (°C) | Izod impact strength (kg· cm/cm) | Friction coefficient | Appearance |
|---|---|---|---|---|---|---|---|---|---|
| Example 3 | 100 | CEFRAL LUBE IP (20) | 50 | 30 | 20∼80 | 277 | 22 | 0.07 | Good |
| Comparative example 4 | 100 | FLUONE L169J (20) | 50 | 30 | 150∼250 | 279 | 18 | 0.10 | White plaque |
| CEFRAL LUBE IP: Manufactured by Central Glass Co., Ltd., trade name FLUONE L169J: Manufactured by Asahi Glass Co., Ltd., trade name | | | | | | | | | |

The liquid crystal polyester resin composition of the present invention manifests excellent dispersibility of a fluorocarbon polymer and can gives excellent appearance, mechanical strength and lubricative property of the resulting resin molded article, because of inclusion of a specific fluorocarbon polymer in specific ratio in a liquid crystal polyester resin. Therefore, this composition is useful particularly, as a raw material of resin molded articles in electric and electronic fields and the like, and further, useful in wide variety of uses.

## Claims

1. A liquid crystal polyester resin composition comprising a liquid crystal polyester resin and a fluorocarbon polymer having a flow beginning temperature of 350°C or less, measured according to the following method, in an amount of 0.2 to 50 parts by weight based on 100 parts by weight of the liquid crystal polyester resin:
Flow beginning temperature: a temperature at which the melt viscosity measured by a capillary type rheometer is 48,000 poise when a resin which has been melted by heating at a heating rate of 4°C/min is extruded through a nozzle having an internal diameter of 1 mm and a length of 10 mm under a load of 100 kg/cm².

2. The liquid crystal polyester resin composition according to Claim 1 wherein the fluorocarbon polymer is a polytetrafluoroethylene which has been fluorinated to molecular terminals thereof.

3. The liquid crystal polyester resin composition according to Claim 1 or 2 wherein the liquid crystal polyester resin contains a repeating structure unit represented by the formula (A₁) in an amount of at least 30 mol% based on the total amount.

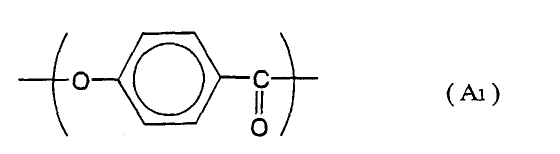

4. The liquid crystal polyester resin composition according to Claim 1 or 2, wherein the resin composition further comprises glass fibers and/or carbon fibers as a filler.

5. The liquid crystal polyester resin composition according to Claim 4 wherein the content of the glass fibers and/or carbon fibers is from 10 to 100 parts by weight based on 100 parts by weight of the liquid crystal polyester resin.
